(19)

Europäisches Patentamt
European Patent Office
Office européen des brevets

(11)  **EP 4 557 622 A1**

(12)  **EUROPEAN PATENT APPLICATION**

(43) Date of publication:
21.05.2025  Bulletin 2025/21

(21) Application number: 24211647.3

(22) Date of filing: 08.11.2024

(51) International Patent Classification (IPC):
H04B 1/04 (2006.01)       H04B 17/13 (2015.01)

(52) Cooperative Patent Classification (CPC):
H04B 1/0475; H04B 17/13; H04B 17/21

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  16.11.2023  KR 20230159283
13.02.2024  KR 20240020664

(71) Applicant: Samsung Electronics Co., Ltd.
Suwon-si, Gyeonggi-do 16677 (KR)

(72) Inventors:
• LEE, Jiyoung
16677 Suwon-si (KR)
• KIM, Taejong
16677 Suwon-si (KR)
• BAE, Jeongyeol
16677 Suwon-si (KR)
• YOO, Sangmin
16677 Suwon-si (KR)
• LEE, Jongsoo
16677 Suwon-si (KR)

(74) Representative: Marks & Clerk LLP
15 Fetter Lane
London EC4A 1BW (GB)

(54)  **METHOD OF IP2 CALIBRATION FOR WIRELESS TRANSCEIVER AND DEVICE FOR PERFORMING IP2 CALIBRATION**

(57)  A device configured to perform second order intercept point (IP2) calibration for a wireless transceiver includes a memory storing instructions, an interface, and at least one processor communicatively coupled to the interface and to the memory. The interface is configured to receive, from the wireless transceiver, a signal including second order intermodulation distortion (IMD2), and transmit, to the wireless transceiver, an in-phase correction code (I-correction code) and a quadrature-phase correction code (Q-correction code). The at least one processor is configured to execute the instructions to analyze a level of the IMD2 based on a plurality of heterogeneous methods, and adjust at least one of the I-correction code or the Q-correction code based on analysis results.

FIG. 2

```
         START
           │
           ▼                              S100
┌──────────────────────────────────┐
│   INPUT CALIBRATION SIGNAL TO    │
│   TRANSMISSION PORT OF DUPLEXER  │
└──────────────────────────────────┘
           │
           ▼                              S110
┌──────────────────────────────────┐
│ ANALYZE PORTION OF CALIBRATION   │
│ SIGNAL LEAKED TO RECEPTION PORT  │
│ OF DUPLEXER BASED ON             │
│ HETEROGENEOUS METHODS            │
└──────────────────────────────────┘
           │
           ▼                              S120
┌──────────────────────────────────┐
│ SET PARAMETERS RELATED TO IP2    │
│ CALIBRATION BASED ON ANALYSIS    │
│ RESULT                           │
└──────────────────────────────────┘
           │
           ▼
          END
```

EP 4 557 622 A1

**Description**

BACKGROUND

1. Field

The present disclosure relates to a second order intercept point (IP2) calibration for a wireless transceiver, and more particularly, to an IP2 calibration method and a device for performing IP2 calibration.

2. Description of Related Art

A second order intercept point (IP2) calibration may refer to an operation that may be performed by cellular frequency division duplex (FDD) systems to potentially obtain a finite solution between the transmitter and the receiver of a wireless transceiver. For example, the IP2 calibration may be performed on the wireless transceiver to potentially mitigate the effects of second order intermodulation distortion (IMD2). The IMD2 may occur when a portion of the transmission signal output from the transmitter leaks to the receiver through a duplexer and/or diplexer and is input by a mixer of the receiver. As used herein, IP2 calibration may refer to an operation to potentially minimize and/or reduce the level of IMD2 in a wireless transceiver.

There exists a need for further improvements in performing effective IP2 calibration, as the need for performing FDD communications may be constrained by IMD2. Improvements are presented herein. These improvements may also be applicable to other wireless communication technologies and the communication standards that employ these technologies.

SUMMARY

One or more example embodiments of the present disclosure provide a second order intercept point (IP2) calibration method for a wireless transceiver that may generate optimized pieces of codes for setting up the wireless transceiver during a short calibration performance time, and a device for performing IP2 calibration therefor.

According to an aspect of the present disclosure, a device configured to perform second order intercept point (IP2) calibration for or of a wireless transceiver includes a memory storing instructions, an interface, and at least one processor communicatively coupled to the interface and to the memory. The interface is configured to receive, from the wireless transceiver, a signal including second order intermodulation distortion (IMD2), and transmit, to the wireless transceiver, an in-phase correction code (I-correction code) and a quadrature-phase correction code (Q-correction code). The at least one processor is configured to execute the instructions to analyze a level of the IMD2 based on a plurality of heterogeneous methods, and adjust at least one of the 1-correction code or the Q-correction code based on analysis results.

According to an aspect of the present disclosure, a IP2 calibration method for or a method of IP2 calibration of a wireless transceiver includes determining an I-start correction code and a Q-start correction code based on an calculation method based on at least one of a fixed I-correction code or a fixed Q-correction code, determining an I-intermediate correction code and a Q-intermediate correction code based on a binary search method based on the I-start correction code and the Q-start correction code, and determining an I-final correction code and a Q-final correction code based on a plurality of points including a point composed of the I-intermediate correction code and the Q-intermediate correction code. The method may comprise determining an I-intermediate correction code and a Q-intermediate correction code based on a binary search method of the I-start correction code and the Q-start correction code, respectively. The method may comprise determining an I-intermediate correction code and a Q-intermediate correction code based on a binary search method which is based on the I-start correction code and the Q-start correction code, respectively.

According to an aspect of the present disclosure, a device configured to perform IP2 calibration for a wireless transceiver, or a device configured to perform IP2 calibration of a wireless transceiver, includes a memory storing instructions, an interface, and neural network processor communicatively coupled to the interface and to the memory. The interface is configured to receive, from the wireless transceiver, a signal including IMD2, and transmit, to the wireless transceiver, an I-correction code and a Q-correction code. The neural network processor is configured to set parameters of a plurality of heterogeneous methods based on a plurality of pieces of IP2 calibration data collected from the interface, and determine an I-final correction code and a Q-final correction code that minimizes the IMD2 based on the plurality of heterogeneous methods.

Additional aspects may be set forth in part in the description which follows and, in part, may be apparent from the description, and/or may be learned by practice of the presented embodiments.

At least some of the above and other features of the disclosure are set out in the claims.

BRIEF DESCRIPTION OF THE DRAWINGS

The above and other aspects, features, and advantages of certain embodiments of the present disclosure may be more apparent from the following description taken in conjunction with the accompanying drawings, in which:

FIG. 1 is a schematic block diagram of second order intercept point (IP2) calibration, according to an embodiment;
FIG. 2 is a flowchart illustrating an example of an IP2 calibration method, according to an embodiment;
FIG. 3 is a block diagram showing a receiving circuit and other features of FIG. 1, according to an embodiment;
FIG. 4 is a flowchart illustrating an example of a detailed IP2 calibration method, according to an embodiment;
FIG. 5 is a three-dimensional (3D) diagram of the levels of IMD2 related to IP2 calibration, according to an embodiment;
FIG. 6 is a flowchart illustrating an example of an IP2 calibration method, according to an embodiment;
FIG. 7A is a diagram depicting operation S301 of FIG. 6, according to an embodiment;
FIG. 7B is a diagram illustrating operation S302 of FIG. 6, according to an embodiment;
FIG. 8A is a diagram depicting operation S311 of FIG. 6, according to an embodiment;
FIGS. 8B and 8C are diagrams illustrating operation S312 of FIG. 6, according to an embodiment;
FIG. 9 is a diagram depicting operation S340 of FIG. 6, according to an embodiment;
FIG. 10 is a diagram illustrating a binary search target set used in a binary search method, according to an embodiment;
FIG. 11 is a flowchart depicting an IP2 calibration method considering the characteristics of heterogeneous methods, according to an embodiment;
FIG. 12A and 12B are diagrams illustrating operation S400 of FIG. 11, according to an embodiment;
FIG. 13 is a flowchart depicting an example of an IP2 calibration method considering the characteristics of heterogeneous methods, according to an embodiment;
FIG. 14 is a flowchart illustrating an example of an IP2 calibration method considering the characteristics of heterogeneous methods, according to an embodiment;
FIG. 15 is a diagram depicting operation S600 of FIG. 14, according to an embodiment;
FIG. 16 is a flowchart illustrating a method of setting parameters of heterogeneous methods, according to an embodiment;
FIG. 17 is a block diagram schematically showing a calibration circuit including a neural network module to perform IP2 calibration, according to an embodiment; and
FIG. 18 is a block diagram schematically showing a device for performing IP calibration according to an embodiment.

DETAILED DESCRIPTION

The following description with reference to the accompanying drawings is provided to assist in a comprehensive understanding of embodiments of the present disclosure defined by the claims and their equivalents. Various specific details are included to assist in understanding, but these details are considered to be examples only. Therefore, those of ordinary skill in the art may recognize that various changes and modifications of the embodiments described herein may be made without departing from the scope of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

The terms "upper," "middle", "lower", and the like may be replaced with terms, such as "first," "second," third" to be used to describe relative positions of elements. The terms "first," "second," third" may be used to describe various elements but the elements are not limited by the terms and a "first element" may be referred to as a "second element". Alternatively or additionally, the terms "first", "second", "third", and the like may be used to distinguish components from each other and do not limit the present disclosure. For example, the terms "first", "second", "third", and the like may not necessarily involve an order or a numerical meaning of any form.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, various embodiments of the present disclosure are described with reference to the accompanying drawings.

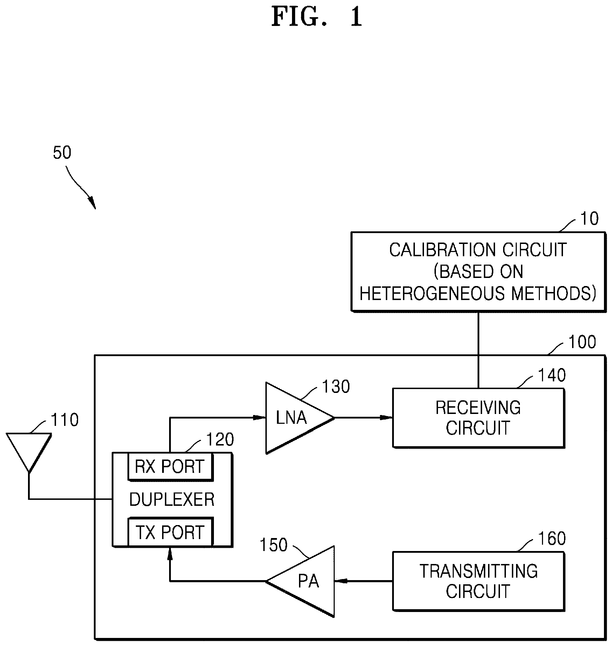

FIG. 1 is a schematic block diagram of IP2 calibration, according to an embodiment. Referring to FIG. 1, a second order intercept point (IP2) calibration architecture 50 is disclosed, which includes a wireless transceiver 100 and a calibration circuit 10 that performs IP2 calibration for the wireless transceiver 100. The IP2 calibration architecture 50 may be used in a factory setting stage and/or an initial setting stage to calibrate the wireless transceiver 100. The calibration circuit 10 may determine optimal values of codes by adjusting the values of codes provided to the wireless transceiver 100 and analyzing the output of the wireless transceiver 100 which depends on the adjusted codes. The wireless transceiver 100 may be set based on codes having optimal values determined through the calibration circuit 10 in the factory setting stage.

Hereinafter, the description may focus on embodiments related to the configuration and operation of the calibration circuit 10 that performs IP2 calibration for or of the wireless transceiver 100. However, the technical ideas of the present disclosure may also be applied when calibrating various factors for the wireless transceiver 100.

Referring to FIG. 1, the wireless transceiver 100 may include an antenna 110, a duplexer 120, a low noise amplifier (LNA) 130, a receiving circuit 140, a power amplifier (PA) 150, and a transmitting circuit 160. In some embodiments, the wireless transceiver 100 may include an alternative diplexer configuration, such as the duplexer 120, and the technical ideas of the present disclosure described below may also be applied to the wireless transceiver 100 including the diplexer. As used herein, the wireless transceiver 100 may refer to any device that may connect to a wireless communication system. In some embodiments, the wireless transceiver 100 may be referred to as a user equipment (UE), a terminal equipment, a mobile station (MS), a mobile terminal (MT), a user terminal (UT), a subscribe station (SS), a wireless device, a wireless communication device, a handheld device, and the like. In addition, the wireless communication system to which the wireless transceiver 100 may be connected may use a cellular network such as, but not limited to, a new radio (NR) system, a long term evolution (LTE) system, an LTE-Advanced (LTE-A) system, a code division multiple access (CDMA) system, a global system for mobile communication (GSM) system, a wireless local area network (WLAN) system, or any other wireless communication system.

The transmitting circuit 160 may include components that may be needed to generate a transmission signal. For example, the transmitting circuit 160 may include a digital to analog converter (DAC), a modulator, a frequency oscillator, or the like. The PA 150 may amplify the transmission signal generated by the transmitting circuit 160. The receiving circuit 140 may include components that may be needed to process the received signal. For example, the receiving circuit 140 may include an analog to digital converter (ADC), a demodulator, a frequency oscillator, or the like. The LNA 130 may amplify the received signal before the received signal is transmitted to the receiving circuit 140. The duplexer 120 may be configured to perform bi-directional (e.g., simultaneous transmission and reception) communication through one path and may isolate the transmitting circuit 160 and the receiving circuit 140 from each other. The duplexer 120 may include a transmission port TX PORT allocated to the transmitting circuit 160 and a reception port RX PORT allocated to the reception circuit 140. The antenna 110 may transmit and/or receive wireless signals.

For IP2 calibration of the wireless transceiver 100, a calibration signal may be inserted into the wireless transceiver 100 and/or may be generated within the wireless transceiver 100. As used herein, the calibration signal may refer to a test signal with a predetermined pattern for IP2 calibration. For example, the calibration signal may be input to the transmission port TX PORT of the duplexer 120 in a state where the transmitting circuit 160 is connected to the antenna 110 and the receiving circuit 140 is separated from the transmitting circuit 160. In such a case, a portion of the calibration signal may leak into the receiving circuit 140 due to the physical limitations of the duplexer 120, which may cause second order intermodulation distortion (IMD2) in the receiving circuit 140.

In an embodiment, the calibration circuit 10 may receive a signal including IMD2 from the receiving circuit 140, analyze the level of IMD2 included in the signal based on heterogeneous methods, adjust codes for setting the values of parameters of components of the receiving circuit 140 based on the analysis results, and transmit the adjusted codes to the receiving circuit 140. In an embodiment, the calibration circuit 10 may determine optimal pieces of codes by repeating the above operation a number of times corresponding to the heterogeneous methods. As used herein, the heterogeneous methods may be refer to different calibration algorithms that the calibration circuit 10 may use to determine optimal pieces of codes.

In an embodiment, the calibration circuit 10 may set parameters for another method based on the results of IP2 calibration according to one method. In an embodiment, the calibration circuit 10 may adjust the results of IP2 calibration according to one method to suit another method. Additionally or alternatively, the calibration circuit 10 may collect a plurality of pieces of data regarding the heterogeneous methods and set parameters of the heterogeneous methods. For example, the plurality of pieces of data may include a data set to indicate relationships between heterogeneous methods. In such a manner, the calibration circuit 10 may perform an operation to maximize synergy between heterogeneous methods by considering the characteristics of the heterogeneous methods.

The calibration circuit 10, according to the embodiment, may relatively quickly determine optimal pieces of codes for setting up the receiving circuit 140 by performing IP2 calibration by combining heterogeneous methods, and as a result, resources for IP2 calibration may be used efficiently.

In addition, the calibration circuit 10, according to an embodiment, may perform more effective IP2 calibration by setting parameters for the heterogeneous methods and/or adjusting the results of IP2 calibration for the heterogeneous methods based on the characteristics of the heterogeneous methods.

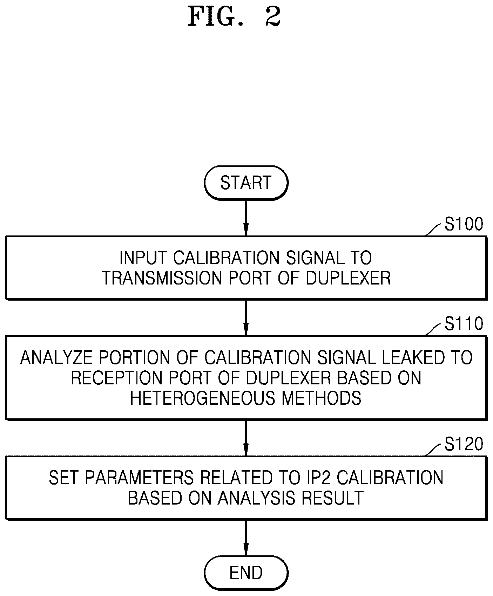

FIG. 2 is a flowchart illustrating an example of an IP2 calibration method, according to an embodiment. FIG. 2 is described with further reference to FIG. 1 to aid understanding.

Referring to FIG. 2, in operation S 100, the calibration signal may be input to the transmission port TX PORT of the duplexer 120. For example, the calibration signal may be generated externally and/or may be obtained from the transmitting circuit 160. In some embodiments, a noise signal may be input to the reception port RX PORT of the duplexer 120 through an internal connection circuit included in the wireless transceiver 100. The noise signal may be generated and/or processed to correspond to a portion of the calibration signal input to the transmission port TX PORT of the duplexer 120 that may leak to the reception port RX PORT.

In operation S 110, the calibration circuit 10 may analyze the portion of the calibration signal leaked to the reception port RX PORT of the duplexer 120, i.e., a noise signal, based on heterogeneous methods. For example, the portion of the calibration signal leaking to the reception port RX PORT may pass through the LNA 130 and the receiving circuit 140 to be converted into a signal including IMD2 and provided to the calibration circuit 10. As another example, the calibration circuit 10 may measure the level of IMD2, adjust the codes based on the measurement results, and then transmit the adjusted codes to the receiving circuit 140. Subsequently, the calibration circuit 10 may measure the level of IMD2 changed by the adjusted codes, adjust the codes based on the measurement results, and then transmit the adjusted codes to the receiving circuit 140. In such a manner, the calibration circuit 10 may repeat the operation of measuring the level of IMD2 of the signal received from the transmitting circuit 160 based on heterogeneous methods and adjusting the codes based on the measurement results multiple times. The calibration circuit 10 may repeat the operation of measuring and adjusting a preset number of times as will be described. This may improve the accuracy of the codes and accordingly the accuracy, effectiveness and/or efficiency of the calibration.

In operation S120, the calibration circuit 10 may set parameters related to IP2 calibration for the receiving circuit 140 based on the analysis result of operation S110. For example, through operation S110, optimal pieces of codes that may minimize the level of IMD2 may be determined by the calibration circuit 10, and parameters of the receiving circuit 140 may be set to match the determined optimal pieces of codes.

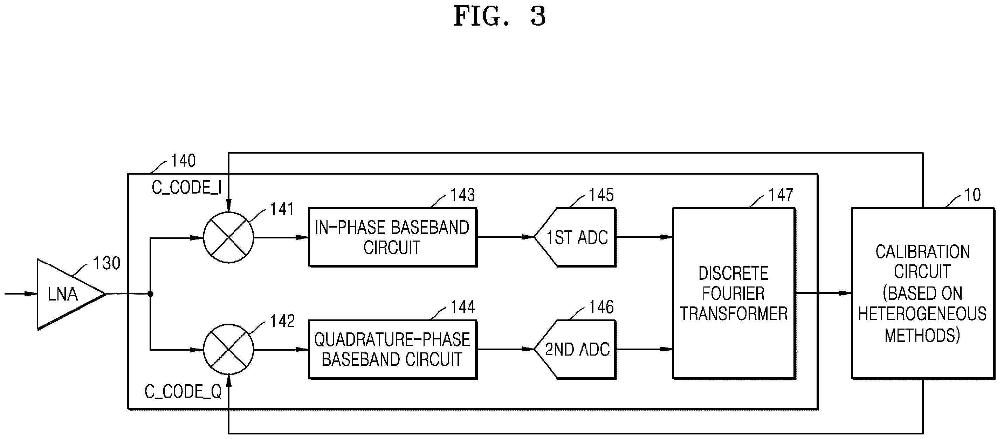

FIG. 3 is a block diagram showing the receiving circuit 140 and other features of FIG. 1, according to an embodiment. The receiving circuit 140 in FIG. 3 is only an example embodiment, and the present disclosure not limited thereto. That is, the technical ideas of the present disclosure may also be applied to another receiving circuit 140 that may be implemented in various other configurations.

Referring to FIG. 3, the receiving circuit 140 may include a first receiving mixer 141, a second receiving mixer 142, an in-phase baseband circuit 143 (or an in-phase baseband demodulator), a quadrature-phase baseband circuit 144 (or a quadrature-phase baseband demodulator), a first ADC 145, a second ADC 146, and a discrete Fourier transformer 147.

The first receiving mixer 141 and the second receiving mixer 142 may frequency-downconvert the radio frequency (RF) signal (e.g., a portion of the calibration signal leaked from the duplexer) received from the LNA 130 into an analog baseband signal. The in-phase baseband circuit 143 and the quadrature-phase baseband circuit 144 may demodulate the analog baseband signal. The first ADC 145 and the second ADC 146 may convert the demodulated analog baseband signal into a digital signal. The discrete Fourier transformer 147 may perform a Fourier transform on the digital signal to measure the level of IMD2.

As used herein, a path consisting of the first receiving mixer 141, the in-phase baseband circuit 143, and the first ADC 145 may be referred to as an I-path, and a path consisting of the second receiving mixer 142, the quadrature-phase baseband circuit 144, and the second ADC 146 may be referred to as a Q-path. The RF signal received from the LNA 130 may be converted into a first partial signal corresponding to the real part of the IMD2 tone by passing through the I-path and the discrete Fourier transformer 147 and then being provided to the calibration circuit 10. In addition, the RF signal received from the LNA 130 may be converted into a second partial signal corresponding to the imaginary part of the IMD2 tone by passing through the Q-path and the discrete Fourier transformer 147 and then being provided to the calibration circuit 10. That is, the calibration circuit 10 may receive a signal including the first partial signal and the second partial signal from the discrete Fourier transformer 147.

In an embodiment, the calibration circuit 10 may obtain the level of IMD2 of the signal received from the discrete Fourier transformer 147 by measuring the level of the first partial IMD2 of the first partial signal received from the discrete Fourier transformer 147 (e.g., a real part of an IMD2) and measuring the level of the second portion IMD2 of the second partial signal (e.g., an imaginary part of an IMD2), and then adding the level of the first partial IMD2 and the level of the second portion IMD2. For example, the calibration circuit 10 may obtain the level of the first partial IMD2 by measuring the amplitude of the first partial signal, and may obtain the level of the second partial IMD2 by measuring the amplitude of the second partial signal. More generally, the calibration circuit 10 may obtain a level of a received IMD2 by measuring the amplitude of the IMD2. The calibration circuit 10 may adjust an 1-correction code C_CODE_I and/or a Q-correction code C_CODE_Q based on the measurement results and may transmit the I-correction code C_CODE_I to the first receiving mixer 141 and the Q-correction code C_CODE_Q to the second receiving mixer 142.

As used herein, the 1-correction code C_CODE_I may refer to a code for controlling the characteristics of the first receiving mixer 141, and the Q-correction code C_CODE_Q may refer to a code for controlling the characteristics of the second receiving mixer 142. In some embodiments, the 1-correction code C_CODE_I may be and/or may include a code for controlling on/off of transistors included in the first receiving mixer 141, and the Q-correction code C_CODE_Q may be and/or may include a code for controlling on/off of transistors included in the second reception mixer 142. More generally, the 1-correction code C_CODE_I may be for controlling elements of the I-path, and the Q-correction code C_CODE_Q may be for controlling elements of the Q-path.

In an embodiment, the calibration circuit 10 may analyze the level of IMD2 of the signal including the first partial signal and the second partial signal based on heterogeneous methods and may adjust the 1-correction code C_CODE_I or the Q-correction code C_CODE_Q for transmission to the first receiving mixer 141 and the second receiving mixer 142.

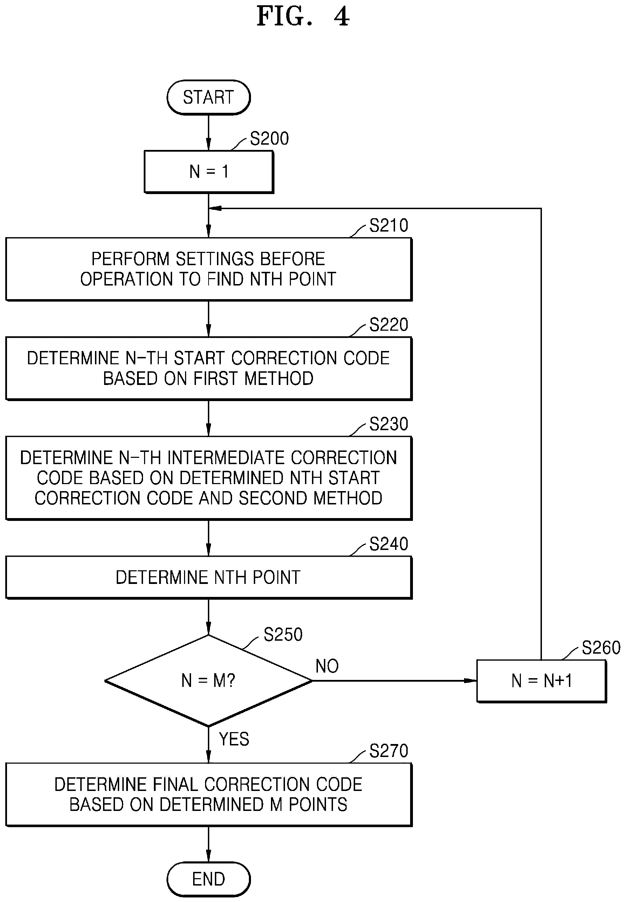

FIG. 4 is a flowchart illustrating an example of a detailed IP2 calibration method, according to an embodiment. Hereinafter, to aid understanding, FIGS. 3 and 4 may be referred to in conjunction, and it may be assumed that the heterogeneous methods include a first method and a second method.

Referring to FIG. 4, in operation S200, after setting N to one (1), the calibration circuit 10 may perform settings before the operation to find the N-th point in operation S210, where N is a positive integer greater than zero (0). For example, the calibration circuit 10 may perform settings before operation to find the N-th point to comply with the first method and/or the second method that may be the basis of IP2 calibration.

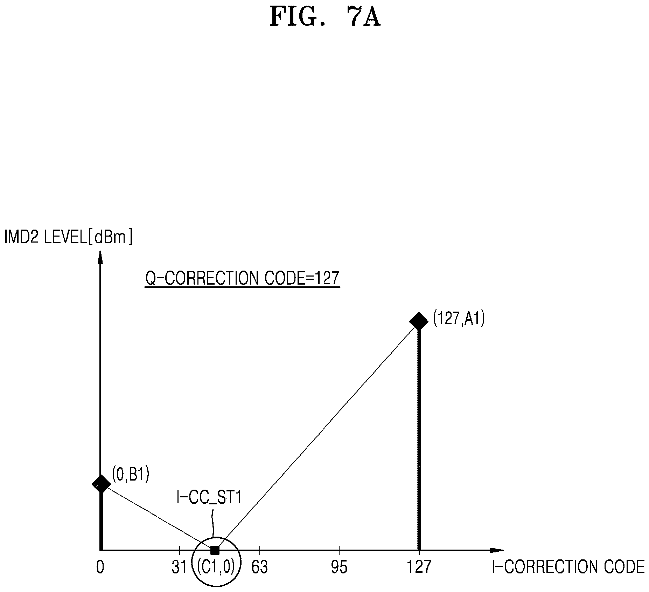

In operation S220, the calibration circuit 10 may determine an N-th start correction code based on the first method. As used herein, the starting correction code may refer to a correction code having a value determined based on the result of IP2 calibration depending on the first method. The N-th start correction code may include an N-th I-start correction code and an N-th Q-start correction code. In addition, the N-th start correction code may be and/or may include a code that may be needed for IP2 calibration based on the second method, and the N-th start correction code may be implemented in various ways depending on the type of the second method. In an embodiment, the first method may correspond to a calculation method, and is further described with reference to FIG. 7A.

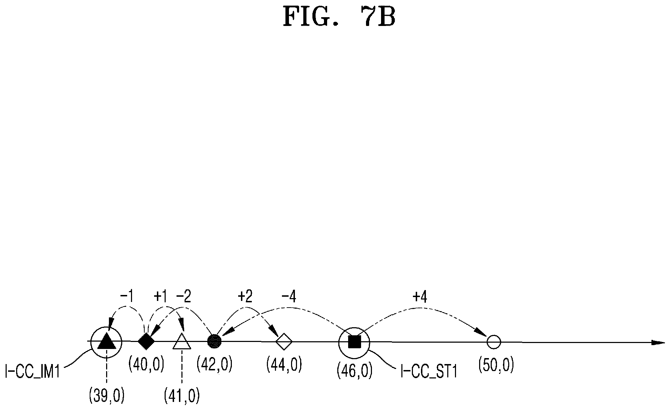

In operation S230, the calibration circuit 10 may determine an N-th intermediate correction code based on the N-th start correction code and the second method determined in operation S220. As used herein, an intermediate correction code may refer to a correction code with a value determined based on the result of IP2 calibration according to the second method. The N-th intermediate correction code may include an N-th I-intermediate correction code and an N-th Q-intermediate correction code. In an embodiment, the second method may correspond to a binary search method, and is further described with reference to FIG. 7B.

In operation S240, the calibration circuit 10 may determine the N-th point consisting of the N-th intermediate correction code determined in operation S230.

In operation S250, the calibration circuit 10 may determine whether N matches a preset threshold M, where M is a positive integer greater than zero (0).

When operation S250 results in a NO, the IP2 calibration method may proceed to operation S260 so that the calibration circuit 10 may count up (e.g., increment) N and then repeat operations S210 to S250.

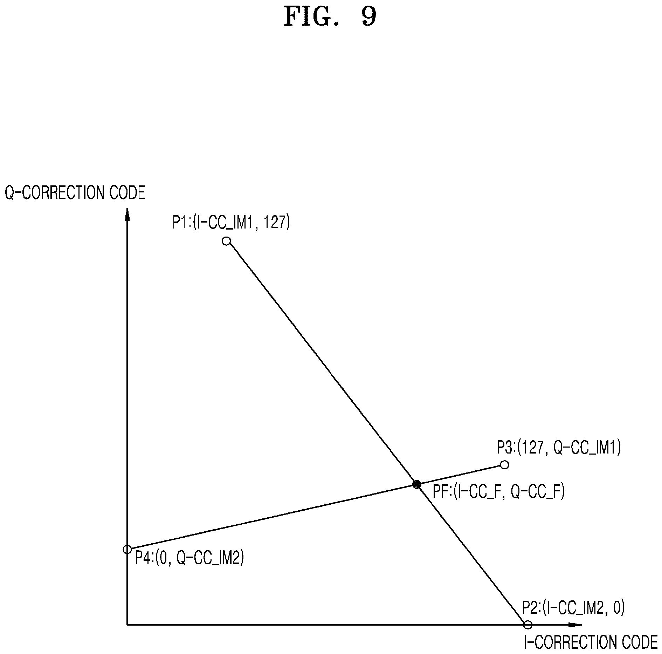

When operation S250 results in a YES, the IP2 calibration method may proceed to operation S270 so that the calibration circuit 10 may determine the final correction code based on the determined M points. As used herein, the final correction code may refer to a correction code with a value finally determined based on the results of IP2 calibration. The final correction codes may include I-final correction codes and Q-final correction codes. An embodiment for determining the final correction code using M points is described with reference to FIG. 9.

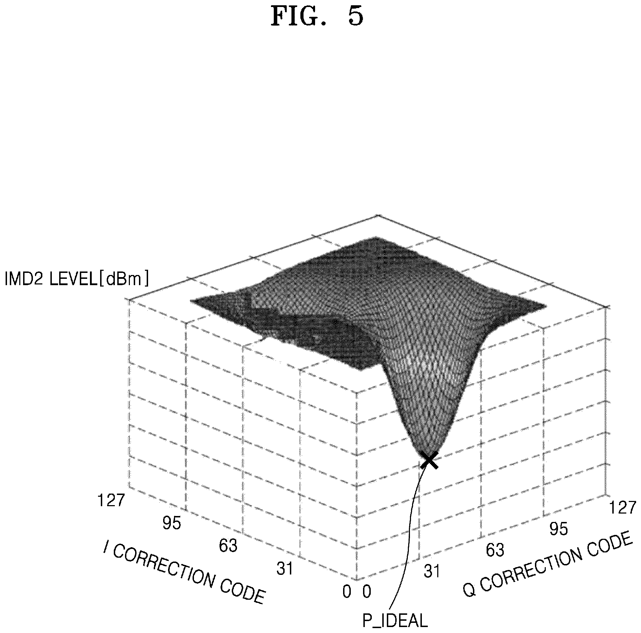

FIG. 5 is a three-dimensional (3D) diagram of the levels of IMD2 related to IP2 calibration, according to an embodiment.

Referring to FIG. 5, as at least one value of the I-correction code and of the Q-correction code changes, the level of IMD2 measured by the calibration circuit 10 may vary. In an embodiment, the range of values that the I-correction code and Q-correction code may have may range from zero (0) to 127. In such a case, the number of bits included in each of the I-correction code and Q-correction code may be equal to seven (7). However, this is only an example embodiment and the present disclosure is not limited thereto. That is, the number of bits included in each of the I-correction code and Q-correction code may vary without departing from the scope of the present disclosure. For example, the range of values that the I-correction code and Q-correction code may be from zero (0) to $2^L-1$, where L is a positive integer greater than one (1).

By performing IP2 calibration based on heterogeneous methods, the calibration circuit 10 may search for a point as close as possible to the ideal point P_IDEAL with the lowest level of IMD2 and may determine the I-correction code and Q-correction code corresponding to the searched point as the I-final correction code and Q-final correction code.

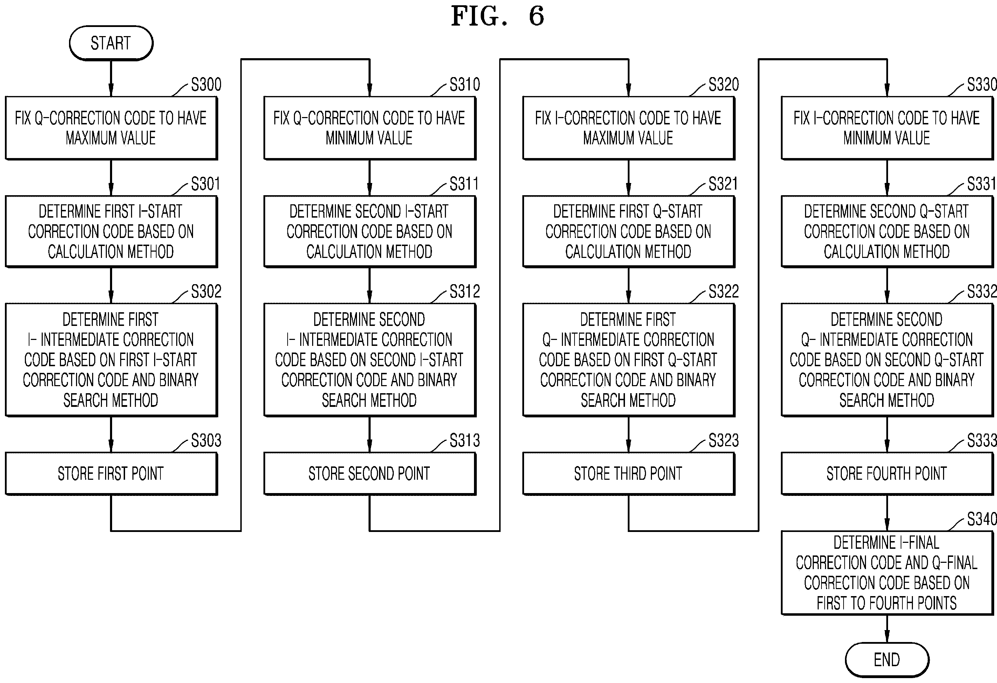

FIG. 6 is a flowchart illustrating an example of an IP2 calibration method, according to an embodiment. Referring to FIG. 6, it may be assumed that the first method is a calculation method and that the second method is a binary search method.

In operation S300, the calibration circuit 10 may fix the Q-correction code to have a maximum value of the Q-correction code. For example, as shown in FIG. 5, the calibration circuit 10 may fix the Q-correction code to have a value of '127'.

In operation S301, the calibration circuit 10 may determine a first I-start correction code based on the calculation method. For example, the calibration circuit 10 may adjust the 1-correction code to have a maximum value thereof, transmit the I-correction code and the Q-correction code each having the maximum value to the first receiving mixer and the second receiving mixer, respectively, and may measure the level of IMD2 of the signal received from the discrete Fourier transformer. The calibration circuit 10 may adjust the I-correction code to have a minimum value thereof and transmit the 1-correction code with the minimum value and the Q-correction code with the maximum value thereof to the first receiving mixer and the second receiving mixer, respectively, and may measure the level of IMD2 of the signal received from the discrete Fourier transformer. The calibration circuit 10 may determine the first I-start correction code based on the measurement results. In some embodiments, the calibration circuit 10 may be used after measuring the level of IMD2 of the received signal and converting the measured level of IMD2 into a root mean square.

In operation S302, the calibration circuit 10 may determine the first I-intermediate correction code based on the first I-start correction code determined in operation S301 and the binary search method. For example, the calibration circuit 10 may sequentially adjust the first I-start correction code based on values corresponding to different step sizes constituting the binary search target set and measure changes in the level of IMD2 of a signal received from the discrete Fourier transformer. In such a case, the Q-correction code may be fixed to have a maximum value. The calibration circuit 10 may determine a correction code obtained by adjusting the first I-start correction code by the measured value of the lowest level value of IMD2 among the values of the binary search target set as a first I-intermediate correction code.

In operation S303, the calibration circuit 10 may store the first point consisting of the first I-intermediate correction code and the Q-correction code with the maximum value determined in operation S302.

In operation S310, the calibration circuit 10 may fix the Q-correction code to have a minimum value. For example, as shown in FIG. 5, the calibration circuit 10 may fix the Q-correction code to have a value of zero (0).

In operation S311, the calibration circuit 10 may determine a second I-start correction code based on the calculation method. For example, the calibration circuit 10 may adjust the 1-correction code to have a maximum value thereof and transmit the I-correction code with the maximum value and the Q-correction code with a minimum value thereof to the first receiving mixer and the second receiving mixer, respectively, and may measure the level of IMD2 of the signal received from the discrete Fourier transformer. Subsequently, the calibration circuit 10 may adjust the 1-correction code to have a minimum value thereof and transmit the I-correction code and the Q-correction code each having the minimum value to the first receiving mixer and the second receiving mixer, respectively, and may measure the level of IMD2 of the signal received from the discrete Fourier transformer. The calibration circuit 10 may determine the second I-start correction code based on the measurement results.

In operation S312, the calibration circuit 10 may determine the second I-intermediate correction code based on the second I-start correction code determined in operation S311 and the binary search method. For example, the calibration circuit 10 may sequentially adjust the second I-start correction code based on values corresponding to different step sizes constituting the binary search target set and measure changes in the level of IMD2 of a signal received from the discrete Fourier transformer. In such a case, the Q-correction code may be fixed to have a minimum value. The calibration circuit 10 may determine a correction code obtained by adjusting the second I-start correction code by the measured value of the lowest level value of IMD2 among the values of the binary search target set as a second I-intermediate correction code.

In operation S313, the calibration circuit 10 may store the second point consisting of the second I-intermediate correction code and the Q-correction code with the minimum value determined in operation S312.

In operation S320, the calibration circuit 10 may fix the 1-correction code to have a maximum value. For example, as shown in FIG. 5, the calibration circuit 10 may fix the I-correction code to have a value of 127.

In operation S321, the calibration circuit 10 may determine a first Q-start correction code based on the calculation method. For example, the calibration circuit 10 may adjust the Q-correction code to have a maximum value thereof and transmit the I-correction code and the Q-correction code each having the maximum value to the first receiving mixer and the second receiving mixer, respectively, and may measure the level of IMD2 of the signal received from the discrete Fourier transformer. Subsequently, the calibration circuit 10 may adjust the Q-correction code to have a minimum value thereof and transmit the I-correction code and the Q-correction code each having the maximum value thereof to the first receiving mixer and the second receiving mixer, respectively, and may measure the level of IMD2 of the signal received from the discrete Fourier transformer. The calibration circuit 10 may determine the first Q-start correction code based on the measurement results.

In operation S322, the calibration circuit 10 may determine the first Q-intermediate correction code based on the first Q-start correction code determined in operation S321 and the binary search method. For example, the calibration circuit 10 may sequentially adjust the first Q-start correction code based on values corresponding to different step sizes constituting the binary search target set and measure changes in the level of IMD2 of a signal received from the discrete Fourier transformer. In such a case, the I-correction code may be fixed to have a maximum value. The calibration circuit 10 may determine a correction code obtained by adjusting the first Q-start correction code by the measured value of the lowest level value of IMD2 among the values of the binary search target set as a first Q-intermediate correction code.

In operation S323, the calibration circuit 10 may store a third point consisting of the 1-correction code with the maximum value and the first Q-intermediate correction code determined in operation S322.

In operation S330, the calibration circuit 10 may fix the 1-correction code to have a minimum value. For example, as shown in FIG. 5, the calibration circuit 10 may fix the I-correction code to have a value of zero (0).

In operation S331, the calibration circuit 10 may determine a second Q-start correction code based on the calculation method. For example, the calibration circuit 10 may adjust the I-correction code to have a minimum value thereof and transmit the 1-correction code with the minimum value and the Q-correction code with a maximum value thereof to the first receiving mixer and the second receiving mixer, respectively, and may measure the level of IMD2 of the signal received from the discrete Fourier transformer. Subsequently, the calibration circuit 10 may adjust the Q-correction code to have a minimum value thereof and transmit the I-correction code and the Q-correction code each having the minimum value to the first receiving mixer and the second receiving mixer, respectively, and then may measure the level of IMD2 of the signal received from the discrete Fourier transformer. The calibration circuit 10 may determine a second Q-start correction code based on the measurement results.

In operation S332, the calibration circuit 10 may determine a second Q-intermediate correction code based on the second Q-start correction code determined in operation S331 and the binary search method. For example, the calibration circuit 10 may sequentially adjust the second Q-start correction code based on values corresponding to different step sizes constituting the binary search target set and measure changes in the level of IMD2 of a signal received from the discrete Fourier transformer. In such a case, the I-correction code may be fixed to have a minimum value. The calibration circuit 10 may determine a correction code obtained by adjusting the second Q-start correction code by the measured value of the lowest level value of IMD2 among the values of the binary search target set as a second Q-intermediate correction code.

In operation S333, the calibration circuit 10 may store a fourth point consisting of the 1-correction code with the minimum value and the second Q-intermediate correction code determined in operation S332.

In operation S340, the calibration circuit 10 may determine the I-final correction code and the Q-final correction code based on the first to fourth points stored in operations S303, S313, S323, and S333.

In an embodiment, the binary search target sets used in operations S302 to S332 may be identical to each other. In some embodiments, some of operations S302 to S332 may use different binary search target sets. For example, the binary search target set used to determine the first I-intermediate correction code and the second I-intermediate correction code in operations S302 and S312, respectively, may be different from the binary search target set used to determine the first Q-intermediate correction code and the second Q-intermediate correction code in operation S322 and S332, respectively.

Operations S300, S310, S320, and S330 may correspond to operation S210 of FIG. 4. That is, the operation of fixing the 1-correction code or Q-correction code to a specific value may be included in the setting operation before the operation to find any one point.

FIG. 7A is a diagram depicting operation S301 of FIG. 6, according to an embodiment. FIG. 7B is a diagram illustrating operation S302 in FIG. 6, according to an embodiment.

Referring to FIG. 7A, the calibration circuit 10 may fix the Q-correction code to the maximum value of 127 and adjust the 1-correction code to a maximum value of 127, and transmit the adjusted I-correction code to the first receiving mixer and transmit the fixed Q-correction code to the second receiving mixer. Subsequently, the calibration circuit 10 may measure the level of IMD2 of the first signal received from the discrete Fourier transformer. The level of IMD2 of the measured first signal may be A1.

In an embodiment, the calibration circuit 10 may adjust the I-correction code to the minimum value of zero (0), transmit the adjusted I-correction code to the first receiving mixer, and transmit the fixed Q-correction code to the second receiving mixer. Thereafter, the calibration circuit 10 may measure the level of IMD2 of the second signal received from the discrete Fourier transformer. The level of IMD2 of the measured second signal may be B1.

The calibration circuit 10 may determine the first I-start correction code I-CC_ST1 with a value of C1 based on an equation similar to Equation 1.

$$C1 \approx 127 \times \frac{B1}{A1 + B1} \qquad \text{[Equation 1]}$$

In FIG. 7B, the binary search target set may be [±4, ±2, ±1], and C1, the value of the first I-start correction code I-CC_ST1, may be assumed to be forty-six (46). The calibration circuit 10 may perform a binary search in the order of ±4, ±2, ±1, and when all operations based on the values of the binary search target set have been performed, the binary search may be terminated. For example, ±4 may be referred to as the value for the starting search, ±2 may be referred to as the value for the middle search, and ±1 may be referred to as the value for the final search. In addition, the Q-correction code transmitted from the calibration circuit 10 to the second receiving mixer may be fixed to 127.

With further reference to FIG. 7B, the calibration circuit 10 may transmit an I-correction code with fifty (50) obtained by adding four (4) to forty-six (46), which may be the value of the first I-start correction code I-CC_ST1, to the first receiving mixer, and then measure the level of IMD2 of a third signal received from the discrete Fourier transformer. The calibration circuit 10 may transmit an I-correction code with forty-two (42) obtained by subtracting four (4) from forty-six (46), which may be the value of the first I-start correction code I-CC_ST1, to the first receiving mixer, and then measure the level of IMD2 of a fourth signal received from the discrete Fourier transformer. The calibration circuit 10 may compare the level of IMD2 of the third signal with the level of IMD2 of the fourth signal and then select an 1-correction code with forty-two (42) where a lower level of IMD2 is measured.

The calibration circuit 10 may transmit an I-correction code with forty-four (44) obtained by adding two (2) to forty-two (42) to the first receiving mixer, and then measure the level of IMD2 of a fifth signal received from the discrete Fourier transformer. The calibration circuit 10 may transmit an I-correction code with forty (40) obtained by subtracting two (2) from forty-two (42) to the first receiving mixer, and then measure the level of IMD2 of a sixth signal received from the discrete Fourier transformer. The calibration circuit 10 may compare the level of IMD2 of the fifth signal with the level of IMD2 of the sixth signal and then select an 1-correction code with forty (40) where a lower level of IMD2 is measured.

The calibration circuit 10 may transmit an I-correction code with forty-one (41) obtained by adding one (1) to forty (40) to the first receiving mixer, and then measure the level of IMD2 of a seventh signal received from the discrete Fourier transformer. The calibration circuit 10 may transmit an 1-correction code with thirty-nine (39) obtained by subtracting one (1) from forty (40) to the first receiving mixer, and then measure the level of IMD2 of an eighth signal received from the discrete Fourier transformer. The calibration circuit 10 may compare the level of IMD2 of the seventh signal with the level of IMD2 of the eighth signal and then select an 1-correction code with thirty-nine (39) where a lower level of IMD2 is measured. The calibration circuit 10 may determine the I-correction code with thirty-nine (39) as the first I-intermediate correction code I-CC_IM1.

The calibration circuit 10 may store a first point including a first I-intermediate correction code I-CC_IM1 and a Q-correction code with a maximum value.

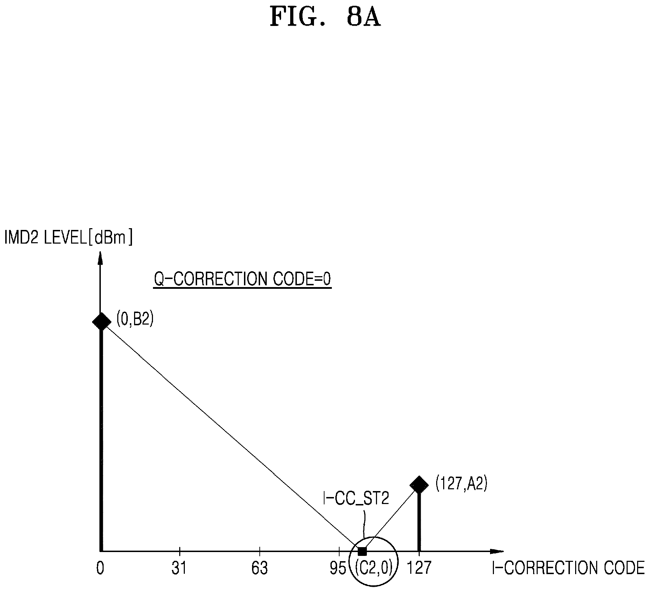

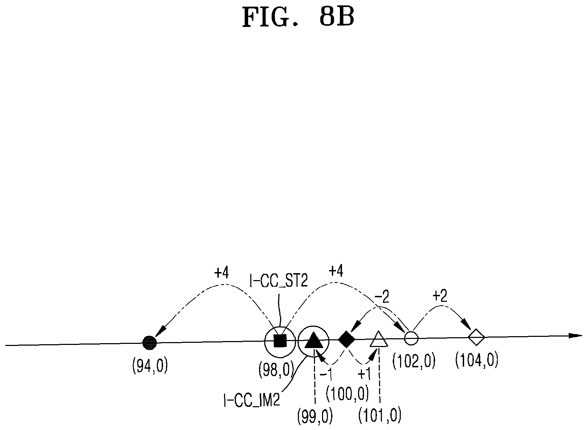

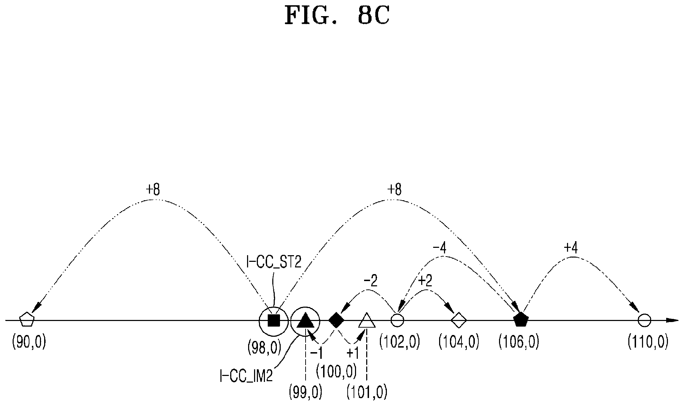

FIG. 8A is a diagram depicting operation S311 of FIG. 6, according to an embodiment. FIGS. 8B and 8C are diagrams illustrating operation S312 of FIG. 6, according to an embodiment.

Referring to FIG. 8A, the calibration circuit 10 may fix the Q-correction code to the minimum value of zero (0) and adjust the I-correction code to a maximum value of 127, and transmit the adjusted I-correction code to the first receiving mixer and transmit the fixed Q-correction code to the second receiving mixer. Subsequently, the calibration circuit 10 may measure the level of IMD2 of the first signal received from the discrete Fourier transformer. The level of IMD2 of the measured first signal may be A2.

In an embodiment, the calibration circuit 10 may adjust the I-correction code to the minimum value of zero (0), transmit the adjusted I-correction code to the first receiving mixer, and transmit the fixed Q-correction code to the second receiving mixer. Thereafter, the calibration circuit 10 may measure the level of IMD2 of the second signal received from the discrete Fourier transformer. The level of IMD2 of the measured second signal may be B2.

The calibration circuit 10 may determine the second I-start correction code I-CC_ST2 with a value of C2 based on an equation similar to Equation 2.

$$C2 \approx 127 \times \frac{B2}{A2 + B2}$$ [Equation 2]

Referring to FIG. 8B, it may be assumed that the binary search target set is [±4, ±2, ±1] and C2, the value of the second I-start correction code I-CC_ST2, may set to ninety-eight (98). In addition, as described above, the Q-correction code transmitted from the calibration circuit 10 to the second receiving mixer may be fixed to zero (0).

With further reference to FIG. 8B, the calibration circuit 10 may transmit an I-correction code with one hundred and two (102) obtained by adding four (4) to ninety-eight (98), which may be the value of the second I-start correction code I-CC_ST2, to the first receiving mixer, and then measure the level of IMD2 of a third signal received from the discrete Fourier transformer. The calibration circuit 10 may transmit an I-correction code with ninety-four (94) obtained by subtracting four (4) from ninety-eight (98), which may be the value of the second I-start correction code I-CC_ST2, to the first receiving mixer, and then measure the level of IMD2 of a fourth signal received from the discrete Fourier transformer. The calibration circuit 10 may compare the level of IMD2 of the third signal with the level of IMD2 of the fourth signal and select an 1-correction code with one hundred and two (102) at which a lower level of IMD2 is measured.

The calibration circuit 10 may add two (2) to one hundred and two (102) and transmit an I-correction code with one hundred and four (104) to the first receiving mixer, and then measure the level of IMD2 of the fifth signal received from the discrete Fourier transformer. The calibration circuit 10 may subtract two (2) from one hundred and two (102) and may transmit an I-correction code with one hundred (100) to the first receiving mixer, and then measure the level of IMD2 of the sixth signal received from the discrete Fourier transformer. The calibration circuit 10 may compare the level of IMD2 of the fifth signal with the level of IMD2 of the sixth signal and select an I-correction code with one hundred (100) at which the level of IMD2 is measured to be lower.

The calibration circuit 10 may transmit an 1-correction code with one hundred and one (101) obtained by adding one (1) to one hundred (100) to the first receiving mixer, and then measure the level of IMD2 of a seventh signal received from the discrete Fourier transformer. The calibration circuit 10 may transmit an 1-correction code with ninety-nine (99) obtained by subtracting one (1) from one hundred (100), which may be the value of the first I-start correction code I-CC_ST1, to the first receiving mixer, and then measure the level of IMD2 of an eighth signal received from the discrete Fourier transformer. The 10 may compare the level of IMD2 of the seventh signal with the level of IMD2 of the eighth signal and then select an 1-correction code with ninety-nine (99) where a lower level of IMD2 is measured. The calibration circuit 10 may determine the 1-correction code with ninety-nine (99) as the second I-intermediate correction code I-CC_IM2.

The calibration circuit 10 may store a second point consisting of a second I-intermediate correction code I-CC_IM2 and a Q-correction code with a minimum value.

In FIG. 8C, unlike FIG. 8B, the binary search target set may be assumed to be [±8, ±4, ±2, ±1]. That is, in the binary search method according to an embodiment, the binary search target set may correspond to the parameters of the binary search method, and the binary search target set may be adaptively set by considering various matters of IP2 calibration.

With further reference to FIG. 8C, the calibration circuit 10 may transmit an I-correction code with one hundred and six (106) obtained by adding eight (8) to ninety-eight (98), which may be the value of the second I-start correction code I-CC_ST2, to the first receiving mixer, and then measure the level of IMD2 of a third signal received from the discrete Fourier transformer. The calibration circuit 10 may transmit an 1-correction code with ninety (90) obtained by subtracting eight (8) from ninety-eight (98), which may be the value of the second I-start correction code I-CC_ST2, to the first receiving mixer, and then measure the level of IMD2 of a fourth signal received from the discrete Fourier transformer. The calibration circuit 10 may compare the level of IMD2 of the third signal with the level of IMD2 of the fourth signal and then select an 1-correction code with one hundred and six (106) where a lower level of IMD2 is measured.

The calibration circuit 10 may transmit an 1-correction code with 110 obtained by adding four (4) to one hundred and six (106), which may be the value of the second I-start correction code I-CC_ST2, to the first receiving mixer, and then measure the level of IMD2 of a fifth signal received from the discrete Fourier transformer. The calibration circuit 10 may transmit an 1-correction code with one hundred and two (102) obtained by subtracting four (4) from one hundred and six (106) to the first receiving mixer, and then measure the level of IMD2 of a sixth signal received from the discrete Fourier transformer. The calibration circuit 10 may compare the level of IMD2 of the fifth signal with the level of IMD2 of the sixth signal and then select an I-correction code with one hundred and two (102) where a lower level of IMD2 is measured.

A subsequent description of the operation of the calibration circuit 10 may be similar in many respects to the operation of the calibration circuit 10 as described with reference to FIG. 8B, and thus, may be omitted for the sake of brevity.

EP 4 557 622 A1

It may be understood that embodiments described with reference to FIGS. 7A to 8C may also be applied when storing the third and fourth points of FIG. 6.

FIG. 9 is a diagram depicting operation S340 of FIG. 6, according to an embodiment.

Referring to FIG. 9, the first point P1 may be composed of a first I-intermediate correction code I-CC_IM1 and a Q-correction code with 127, the second point P2 may be composed of a second I-intermediate correction code I-CC_IM2 and a Q-correction code with zero (0), the third point P3 may be composed of an I-correction code with 127 and a first Q-intermediate correction code Q-CC_IM1, and the fourth point P4 may be composed of an I-correction code with zero (0) and a second Q-intermediate correction code Q-CC_IM2.

In an embodiment, the calibration circuit 10 may determine an intersection point between the line connecting the first point P1 to the second point P2 and the line connecting the third point P3 to the fourth point P4 as a final point PF. The final point PF may be composed of I-final correction code I-CC_F and Q-final correction code Q-CC_F.

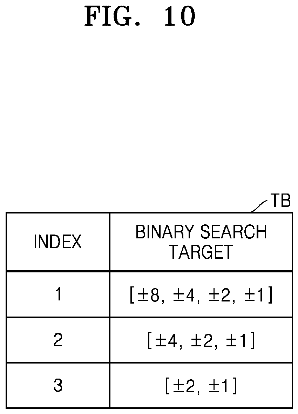

FIG. 10 is a diagram illustrating a binary search target set used in a binary search method, according to an embodiment.

Referring to the table TB in FIG. 10, a first binary search target set matching a first index of one (1) may be [$\pm 8$, $\pm 4$, $\pm 2$, $\pm 1$], a second binary search target set matching a second index of two (2) may be [$\pm 4$, $\pm 2$, $\pm 1$], and a third binary search target set matching a third index of three (3) may be [$\pm 2$, $\pm 1$].

In an embodiment, the calibration circuit 10 may select one of the first to third binary search target sets and perform IP2 calibration using the selected binary search target set. In some embodiments, the calibration circuit 10 may adaptively select a set of binary search targets depending on the state of the wireless transceiver that may be the target of IP2 calibration and/or another type of method associated with the binary search method.

For example, the calibration circuit 10 may adaptively select a first set of binary search targets that may prioritize accuracy over processing speed (e.g., may be used to determine a relatively accurate final point at the expense of speed) and/or may adaptively select a third set of binary search targets that may prioritize processing speed over speed (e.g., may be used to determine the final point relatively quickly at the expense of accuracy).

However, FIG. 10 is only an example embodiment, and the present disclosure is not limited thereto. For example, the calibration circuit 10 may perform an operation based on the binary search method using any one of a larger set of binary search targets.

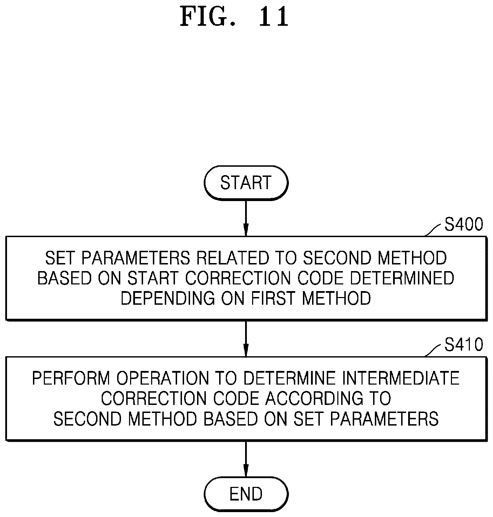

FIG. 11 is a flowchart depicting an IP2 calibration method considering the characteristics of heterogeneous methods, according to an embodiment.

Referring to FIG. 11, in operation S400, the calibration circuit 10 may set parameters for the second method based on the start correction code determined depending on the first method. For example, the calibration circuit 10 may set a binary search target set for the binary search method based on the start correction code determined according to the above-described calculation method. This may allow improve adaptability of the IP2 calibration method.

In operation S410, the calibration circuit 10 may perform an operation to determine an intermediate correction code according to the second method based on the parameters set in operation S400. For example, the calibration circuit 10 may determine an intermediate correction code by performing IP2 calibration based on the binary search method using the binary search target set which is set in operation S400.

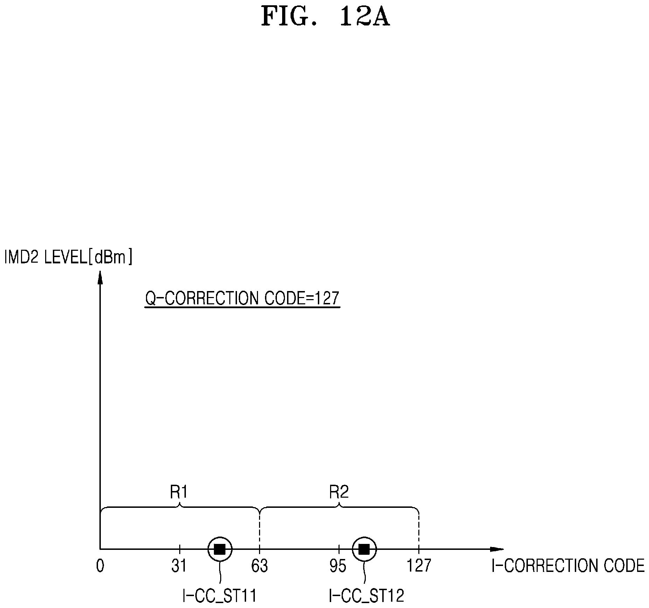

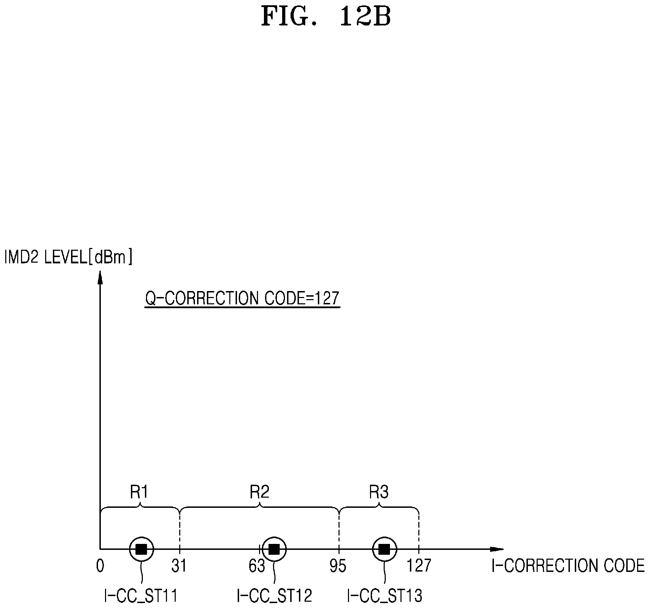

FIG. 12A and 12B are diagrams illustrating operation S400 of FIG. 11, according to an embodiment.

Referring to FIG. 12A, a first range R1 between zero (0) and 63 and a second range R2 between 64 and 127 may be assigned different binary search target sets.

In an embodiment, the first binary search target set of FIG. 10 may be assigned to the first range R1, and the second binary search target set of FIG. 10 may be assigned to the second range R2. In such a case, the calibration circuit 10 may perform IP2 calibration based on the binary search method using [$\pm 8$, $\pm 4$, $\pm 2$, $\pm 1$] when the first I-start correction code I-CC_ST11 is in the first range R1. In addition, the calibration circuit 10 may perform IP2 calibration based on the binary search method using [$\pm 4$, $\pm 2$, $\pm 1$] when the first I-start correction code I-CC_ST12 is in the second range R2.

With reference to FIG. 12B, a first range R1 between zero (0) and 31, a second range R2 between 32 and 95, and a third range R3 between 96 and 127 may each be assigned different binary search target sets.

In an embodiment, the first binary search target set of FIG. 10 may be allocated to the first range R1, the second binary search target set of FIG. 10 may be allocated to the second range R2, and the third binary search target set of FIG. 10 may be allocated to the third range R3. In such a case, the calibration circuit 10 may perform IP2 calibration based on a binary search method using [$\pm 8$, $\pm 4$, $\pm 2$, $\pm 1$] when the first I-start correction code I-CC_ST11 is in the first range R1. The calibration circuit 10 may perform IP2 calibration based on a binary search method using [$\pm 4$, $\pm 2$, $\pm 1$] when the first I-start correction code I-CC_ST12 is in the first range R2. In addition, the calibration circuit 10 may perform IP2 calibration based on a binary search method using [$\pm 2$, $\pm 1$] when the first I-start correction code I-CC_ST13 is in the first range R3.

In some embodiments, the binary search target set allocated to the first range R1 and the binary search target set allocated to the third range R3 may be the same, and the binary search target set allocated to the second range R2 may be different from the binary search target set allocated to the first range R1 and the third range R3.

However, this is only an example embodiment and the present disclosure is not limited thereto. For example, the same or different binary search target sets may be assigned to more or fewer ranges, respectively.

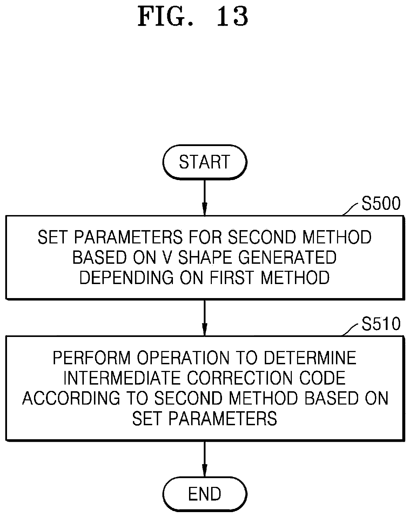

FIG. 13 is a flowchart depicting an example of an IP2 calibration method considering the characteristics of heterogeneous methods, according to an embodiment.

Referring to FIG. 13, in operation S500, the calibration circuit 10 may set parameters for the second method based on the V shape generated depending on the first method. More generally, the calibration circuit 10 may set parameters for the second method based on characteristics of the output of first method. This may improve the efficiency, efficacy, speed and/or adaptability of the calibration method. For example, the calibration circuit 10 may set a set of binary search targets for the binary search method based on the V shape (e.g., V shape in FIG. 7A or FIG. 8A) generated according to the calculation method. That is, the calibration circuit 10 may confirm the V-shaped pattern and set an optimal binary search target set for the confirmed pattern.

In operation S510, the calibration circuit 10 may perform an operation to determine an intermediate correction code according to the second method based on the parameters set in operation S500. For example, the calibration circuit 10 may perform IP2 calibration based on a binary search method using the binary search target set which is set in operation S500.

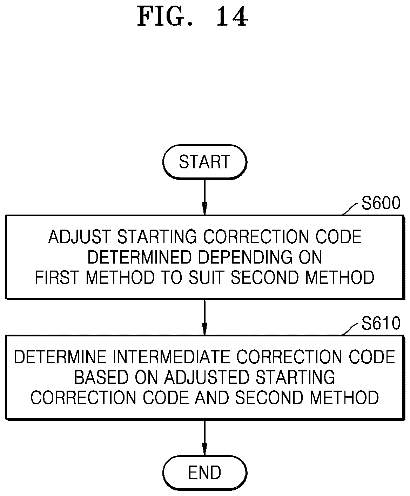

FIG. 14 is a flowchart illustrating an example of an IP2 calibration method considering the characteristics of heterogeneous methods, according to an embodiment.

Referring to FIG. 14, in operation S600, the calibration circuit 10 may adjust the starting correction code determined depending on the first method to suit the second method. For example, the calibration circuit 10 may perform additional adjustments to make the starting correction code determined according to the above-described calculation method suitable for the binary search method.

In operation S610, the calibration circuit 10 may determine an intermediate correction code based on the starting correction code adjusted by operation S600 and the second method. For example, the calibration circuit 10 may perform IP2 calibration based on a binary search method using the adjusted start correction code in operation S600 to determine the intermediate correction code.

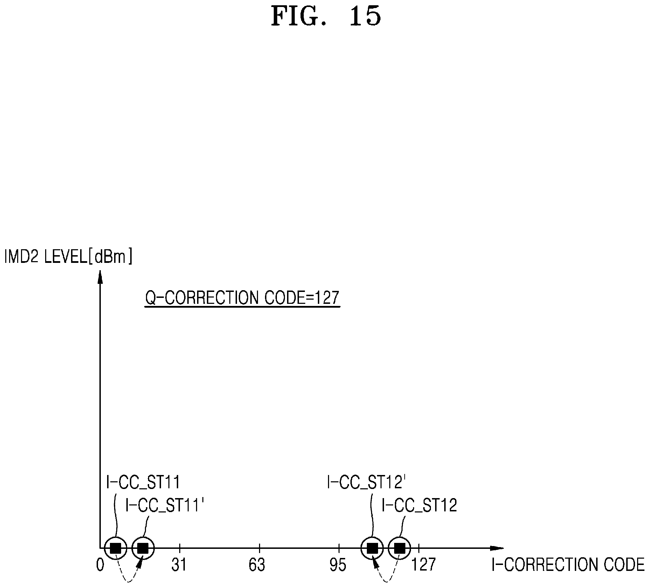

FIG. 15 is a diagram depicting operation S600 of FIG. 14, according to an embodiment.

Referring to FIG. 15, when the first I-start correction code I-CC_ST11 determined according to the calculation method differs from zero (0) to less than a threshold, the calibration circuit 10 may adjust the first I-start correction code by a predetermined adjustment value so that the first I-start correction code I-CC_ST11 becomes a first I-start correction code I-CC_ST11'. In addition, when the first I-start correction code I-CC_ST12 determined according to the calculation method differs from 127 to less than a threshold, the calibration circuit 10 may adjust the first I-start correction code by a predetermined adjustment value so that the first I-start correction code I-CC_ST12 becomes a first I-start correction code I-CC_ST12'. In some embodiments, the adjustment value of the calibration circuit 10 may be set fixedly and/or adaptively as a parameter related to the calculation method.

In an embodiment, the calibration circuit 10 may additionally adjust the first I-start correction codes I-CC_ST11 and I-CC_ST12 so that IP2 calibration based on the binary search method may be performed smoothly.

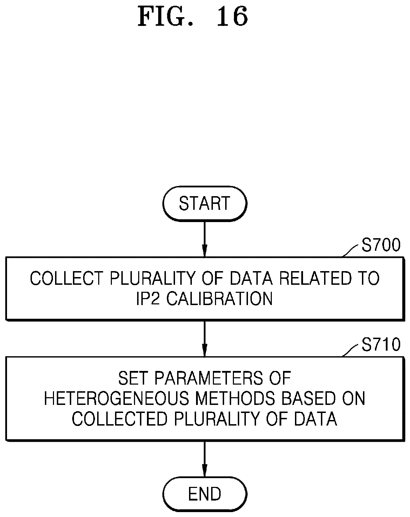

FIG. 16 is a flowchart illustrating a method of setting parameters of heterogeneous methods, according to an embodiment.

Referring to FIG. 16, in operation S700, the calibration circuit 10 may collect a plurality of pieces of data related to IP2 calibration. For example, the plurality of pieces of data may include a data set to indicate relationships between heterogeneous methods.

In operation S710, the calibration circuit 10 may set parameters of heterogeneous methods based on the plurality of pieces of data collected in operation S700. For example, the heterogeneous methods may include the calculation method and the binary search method. The parameters of the calculation method may include parameters related to the adjustment value described with reference to FIG. 15, and the parameters of the binary search method may include parameters related to the binary search target set as described with reference to FIG. 12A.

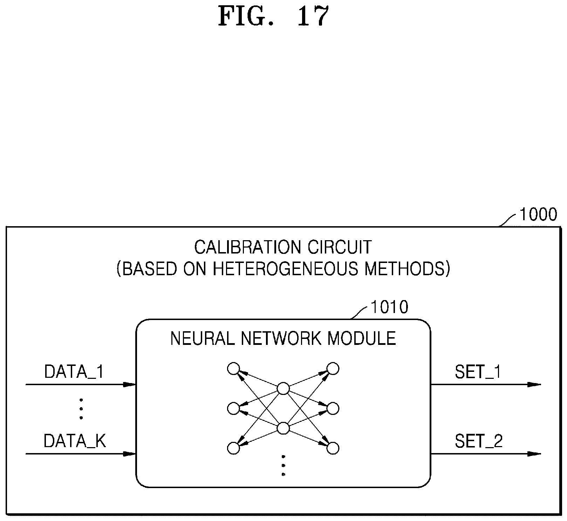

FIG. 17 is a block diagram schematically showing a calibration circuit 1000 including a neural network module 1010 to perform IP2 calibration, according to an embodiment.

Referring to FIG. 17, the calibration circuit 1000 may include a neural network module 1010. In an embodiment, the neural network module 1010 may be generated by training a neural network to set parameters of heterogeneous methods used in IP2 calibration for a wireless transceiver. In some embodiments, the calibration circuit 1000 may include a neural network processor to execute the neural network module 1010, as well as, a memory storing instructions for performing the operations described above.

In an embodiment, the neural network module 1010 may collect a plurality of pieces of data (e.g., a first data DATA_1 to a K-th data DATA_K, where K is a positive integer greater than one (1)) from the wireless transceiver or the calibration circuit 10 and may output first setting information SET_1 for setting parameters of the first method and second setting information SET_2 for setting parameters of the second method based on the plurality of data DATA_1 to DATA K.

In an embodiment, the neural network module 1010 may output first setting information SET_1 and second setting information SET_2 in advance before performing IP2 calibration of the calibration circuit 1000. In some embodiments, the neural network module 1010 may output first setting information SET_1 and second setting information SET_2 to adaptively set parameters of the first method or the second method while performing IP2 calibration of the calibration circuit 1000.

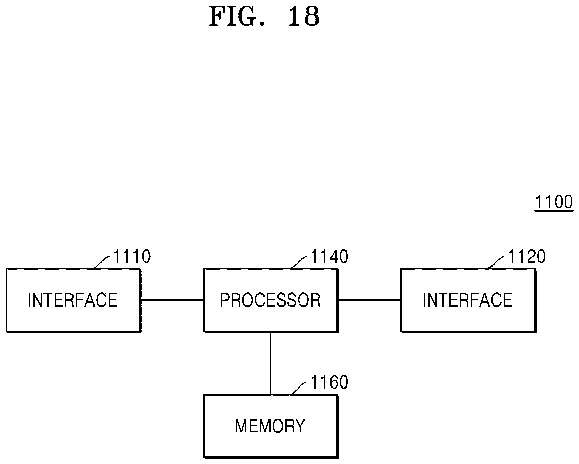

FIG. 18 is a block diagram schematically showing a device 1100 for performing IP calibration according to an embodiment.

Referring to FIG. 18, the device 1100 may include interfaces 1110 and 1120, a processor 1140, and a memory 1160. In some embodiments, the device 1100 may correspond to a calibration circuit. Additionally, in some embodiments, the interfaces 1110 and 1120 may be integrated into one interface.

In an embodiment, the interfaces 1110 and 1120 may be configured to receive a signal including IMD2 from a wireless transceiver and transmit an 1-correction code and a Q-correction code to the wireless transmitter.

In an embodiment, the processor 1140 may analyze the level of IMD2 of the signal received through the interfaces 1110 and 1120 based on heterogeneous methods, and may perform IP2 calibration by adjusting the I-correction code or Q-correction code based on the analysis result. The processor 1140 may perform IP2 calibration to determine the I-final correction code and Q-final correction code.

In an embodiment, the processor 1140 may be implemented as a neural network processor, set parameters of heterogeneous methods based on a plurality of pieces of data for IP2 calibration collected from interfaces 1110 and 1120, and determine the I-final correction code and Q-final correction code to minimize IMD2 based on the set heterogeneous methods.

Commands or codes executed to perform IP2 calibration according to embodiments may be stored in the memory 1160. In addition, the processor 1140 may store data generated while performing IP2 calibration according to embodiments in the memory 1160.

While the calibration circuit 10 has been described as performing IP2 calibration, IP2 calibration may be performed more generally by a device comprising a memory, interface and processor, e.g., the device 1100 illustrated in Figure 18. Further, the calibration circuit 10 may provide the functionality of such a device while comprising, or not necessarily comprising, a memory, interface and/or processor.

While the present disclosure has been particularly shown and described with reference to embodiments thereof, it may be understood that various changes in form and details may be made therein without departing from the scope of the following claims.

**Claims**

1. A device configured to perform second order intercept point (IP2) calibration for a wireless transceiver, the device comprising:

   a memory storing instructions;
   an interface configured to:

   receive, from the wireless transceiver, a signal comprising second order intermodulation distortion (IMD2); and
   transmit, to the wireless transceiver, an in-phase correction code (I-correction code) and a quadrature-phase correction code (Q-correction code); and

   at least one processor communicatively coupled to the interface and to the memory, wherein the at least one processor is configured to execute the instructions to:

   analyze a level of the IMD2 based on a plurality of heterogeneous methods; and
   adjust at least one of the I-correction code or the Q-correction code based on analysis results.

2. The device of claim 1, wherein the plurality of heterogeneous methods comprises at least one of:

   a calculation method configured to determine an I-start correction code and a Q-start correction code; and
   a binary search method configured to determine an I-intermediate correction code and a Q-intermediate correction code based on the I-start correction code and the Q-start correction code.

3. The device of claim 2, wherein the at least one processor is further configured to execute the instructions to:
   set parameters related to the binary search method based on at least one of the I-start correction code and the Q-start correction code determined by the calculation method.

4. The device of claim 2 or 3, wherein the at least one processor is further configured to execute the instructions to: set parameters related to the binary search method based on a V shape related to a level of the IMD2 generated based on the calculation method.

5. The device of any of claims 2 to 4 wherein the at least one processor is further configured to execute the instructions to:

   adjust the I-start correction code and the Q-start correction code determined in the calculation method according to the binary search method; and
   determine the I-intermediate correction code and the Q-intermediate correction code based on the I-start correction code and the Q-start correction code adjusted based on the binary search method.

6. The device of any preceding claim, wherein the at least one processor is further configured to execute the instructions to:
   determine the I-correction code and the Q-correction code at which a level of the IMD2 is minimized as an I-final correction code and a Q-final correction code.

7. The device of any preceding claim, wherein the at least one processor is further configured to execute the instructions to:

   input the I-correction code to a first receiving mixer of an in-phase path (I-path) of the wireless transceiver, and input the Q-correction code to a second receiving mixer of a quadrature-phase path (Q-path) of the wireless transceiver.

8. A second order intercept point (IP2) calibration method for a wireless transceiver, the IP2 calibration method comprising:

   determining an I-start correction code and a Q-start correction code based on an calculation method based on at least one of a fixed in-phase correction code (I-correction code) or a fixed quadrature-phase correction code (Q-correction code);
   determining an I-intermediate correction code and a Q-intermediate correction code based on a binary search method based on the I-start correction code and the Q-start correction code; and
   determining an I-final correction code and a Q-final correction code based on a plurality of points comprising a point composed of the I-intermediate correction code and the Q-intermediate correction code.

9. The IP2 calibration method of claim 8, wherein the determining of the I-start correction code and the Q-start correction code comprises:

   transmitting, to the wireless transceiver, the Q-correction code fixed to have a limited value and the 1-correction code adjusted to have a maximum value thereof, the limited value being selected from a group consisting of a maximum value of the Q-correction code and a minimum value of the Q-correction code;
   measuring a first level of second order intermodulation distortion (IMD2) of a first signal received from the wireless transceiver;
   transmitting, to the wireless transceiver, the Q-correction code fixed to have the limited value thereof and the I-correction code adjusted to have a minimum value thereof;
   measuring a second level of IMD2 of a second signal received from the wireless transceiver; and
   determining the I-start correction code based on the first level and the second level.

10. The IP2 calibration method of claim 8 or 9, wherein the determining of the I-start correction code and the Q-start correction code comprises:

   transmitting, to the wireless transceiver, the I-correction code fixed to have a limited value and the Q-correction code adjusted to have a maximum value thereof, the limited value being selected from a group consisting of a maximum value of the Q-correction code and a minimum value of the Q-correction code;
   measuring a first level of second order intermodulation distortion (IMD2) of a first signal received from the wireless transceiver;
   transmitting, to the wireless transceiver, the I-correction code fixed to have the limited value and the Q-correction code adjusted to have a minimum value thereof;
   measuring a second level of IMD2 of a second signal received from the wireless transceiver; and

determining the Q-start correction code based on the first level and the second level.

11. The IP2 calibration method of any of claims 8 to 10, wherein the determining of the I-intermediate correction code and the Q-intermediate correction code comprises:

transmitting, to the wireless transceiver, a first code obtained by adding a first value of a binary search target set to the I-start correction code;
measuring a first level of second order intermodulation distortion (IMD2) of a first signal received from the wireless transceiver;
transmitting, to the wireless transceiver, a second code in which the first value is subtracted from the I-start correction code;
measuring a second level of IMD2 of a second signal received from the wireless transceiver; and
determining the I-intermediate correction code based on a comparison result between the first level and the second level.

12. The IP2 calibration method of claim 11, further comprising:
determining the first code as the I-intermediate correction code, based on the first value corresponding to a last search of the binary search target set and the second level being greater than the first level.

13. The IP2 calibration method of claim 11, further comprising:
determining the I-intermediate correction code based on the first code and a second value of the binary search target set, based on the first value corresponding to at least one of a start search or an intermediate search of the binary search target set, and the second level being greater than the first level.

14. The IP2 calibration method of any of claims 8 to 10, wherein the determining of the I-intermediate correction code and the Q-intermediate correction code comprises:

transmitting, to the wireless transceiver, a first code obtained by adding a first value of a binary search target set to the Q-start correction code;
measuring a first level of second order intermodulation distortion (IMD2) of a first signal received from the wireless transceiver;
transmitting, to the wireless transceiver, a second code in which the first value is subtracted from the Q-start correction code;
measuring a second level of IMD2 of a second signal received from the wireless transceiver; and
determining the Q-intermediate correction code based on a comparison result between the first level and the second level.

15. The IP2 calibration method of any of claims 8 to 14, wherein the determining of the I-intermediate correction code and the Q-intermediate correction code comprises:
determining the I-intermediate correction code and the Q-intermediate correction code further based on a binary search target set of values corresponding to different step sizes.

# FIG. 1

# FIG. 2

START

S100

INPUT CALIBRATION SIGNAL TO
TRANSMISSION PORT OF DUPLEXER

S110

ANALYZE PORTION OF CALIBRATION SIGNAL LEAKED TO
RECEPTION PORT OF DUPLEXER BASED ON
HETEROGENEOUS METHODS

S120

SET PARAMETERS RELATED TO IP2 CALIBRATION
BASED ON ANALYSIS RESULT

END

FIG. 3

# FIG. 4

START

S200
N = 1

S210
PERFORM SETTINGS BEFORE
OPERATION TO FIND NTH POINT

S220
DETERMINE N-TH START CORRECTION CODE
BASED ON FIRST METHOD

S230
DETERMINE N-TH INTERMEDIATE CORRECTION
CODE BASED ON DETERMINED NTH START
CORRECTION CODE AND SECOND METHOD

S240
DETERMINE NTH POINT

S250
N = M?

NO

S260
N = N+1

YES

S270
DETERMINE FINAL CORRECTION CODE
BASED ON DETERMINED M POINTS

END

# FIG. 5

IMD2 LEVEL[dBm]

127
95
63
31
0 0

I CORRECTION CODE

P_IDEAL

31
63
95
127

Q CORRECTION CODE

# FIG. 6

START

**S300** FIX Q-CORRECTION CODE TO HAVE MAXIMUM VALUE

**S301** DETERMINE FIRST I-START CORRECTION CODE BASED ON CALCULATION METHOD

**S302** DETERMINE FIRST I- INTERMEDIATE CORRECTION CODE BASED ON FIRST I-START CORRECTION CODE AND BINARY SEARCH METHOD

**S303** STORE FIRST POINT

**S310** FIX Q-CORRECTION CODE TO HAVE MINIMUM VALUE

**S311** DETERMINE SECOND I-START CORRECTION CODE BASED ON CALCULATION METHOD

**S312** DETERMINE SECOND I- INTERMEDIATE CORRECTION CODE BASED ON SECOND I-START CORRECTION CODE AND BINARY SEARCH METHOD

**S313** STORE SECOND POINT

**S320** FIX I-CORRECTION CODE TO HAVE MAXIMUM VALUE

**S321** DETERMINE FIRST Q-START CORRECTION CODE BASED ON CALCULATION METHOD

**S322** DETERMINE FIRST Q- INTERMEDIATE CORRECTION CODE BASED ON FIRST Q-START CORRECTION CODE AND BINARY SEARCH METHOD

**S323** STORE THIRD POINT

**S330** FIX I-CORRECTION CODE TO HAVE MINIMUM VALUE

**S331** DETERMINE SECOND Q-START CORRECTION CODE BASED ON CALCULATION METHOD

**S332** DETERMINE SECOND Q- INTERMEDIATE CORRECTION CODE BASED ON SECOND Q-START CORRECTION CODE AND BINARY SEARCH METHOD

**S333** STORE FOURTH POINT

**S340** DETERMINE I-FINAL CORRECTION CODE AND Q-FINAL CORRECTION CODE BASED ON FIRST TO FOURTH POINTS

END

# FIG. 7A

FIG. 7B

# FIG. 8A

IMD2 LEVEL[dBm]

Q-CORRECTION CODE=0

(0,B2)

(127,A2)

I-CC_ST2

(C2,0)

0    31    63    95    127    I-CORRECTION CODE

# FIG. 8B

FIG. 8C

# FIG. 9

# FIG. 10

| INDEX | BINARY SEARCH TARGET |
|-------|---------------------|
| 1 | $[\pm 8, \pm 4, \pm 2, \pm 1]$ |
| 2 | $[\pm 4, \pm 2, \pm 1]$ |
| 3 | $[\pm 2, \pm 1]$ |

TB

# FIG. 11

START

SET PARAMETERS RELATED TO SECOND METHOD
BASED ON START CORRECTION CODE DETERMINED
DEPENDING ON FIRST METHOD
S400

PERFORM OPERATION TO DETERMINE INTERMEDIATE
CORRECTION CODE ACCORDING TO
SECOND METHOD BASED ON SET PARAMETERS
S410

END

# FIG. 12A

IMD2 LEVEL[dBm]

Q-CORRECTION CODE=127

R1     R2

I-CORRECTION CODE

0  31  63  95  127

I-CC_ST11    I-CC_ST12

# FIG. 12B

IMD2 LEVEL[dBm]

Q-CORRECTION CODE=127

R1    R2    R3

0    31    63    95    127    I-CORRECTION CODE

I-CC_ST11    I-CC_ST12    I-CC_ST13

# FIG. 13

START

S500

SET PARAMETERS FOR SECOND METHOD
BASED ON V SHAPE GENERATED
DEPENDING ON FIRST METHOD

S510

PERFORM OPERATION TO DETERMINE
INTERMEDIATE CORRECTION CODE
ACCORDING TO SECOND METHOD BASED ON
SET PARAMETERS

END

# FIG. 14

```
                    ┌─────────┐
                    │  START  │
                    └────┬────┘
                         │
                         ▼                    ╱S600
    ┌─────────────────────────────────────────────┐
    │       ADJUST STARTING CORRECTION CODE        │
    │          DETERMINED DEPENDING ON             │
    │      FIRST METHOD TO SUIT SECOND METHOD      │
    └──────────────────────┬──────────────────────┘
                           │
                           ▼                  ╱S610
    ┌─────────────────────────────────────────────┐
    │  DETERMINE INTERMEDIATE CORRECTION CODE      │
    │        BASED ON ADJUSTED STARTING            │
    │    CORRECTION CODE AND SECOND METHOD         │
    └──────────────────────┬──────────────────────┘
                           │
                           ▼
                    ┌─────────┐
                    │   END   │
                    └─────────┘
```

# FIG. 15

# FIG. 16

START

S700

COLLECT PLURALITY OF DATA RELATED TO
IP2 CALIBRATION

S710

SET PARAMETERS OF
HETEROGENEOUS METHODS BASED ON
COLLECTED PLURALITY OF DATA

END

# FIG. 17

1000

CALIBRATION CIRCUIT
(BASED ON HETEROGENEOUS METHODS)

1010

NEURAL NETWORK MODULE

DATA_1

DATA_K

SET_1

SET_2

# FIG. 18

1100

INTERFACE 1110 — PROCESSOR 1140 — INTERFACE 1120

MEMORY 1160

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/355456 A1 (JIANG HONG [US] ET AL) 4 December 2014 (2014-12-04) * abstract * * paragraphs [0021] - [0050] * * figures 1-12 * | 1-15 | INV. H04B1/04 H04B17/13 |
| A | US 9 712 198 B1 (ZHOU QUAN [US] ET AL) 18 July 2017 (2017-07-18) * abstract * * column 4, line 23 - column 11, line 14 * * figures 1-8 * | 1-15 | |
| A | US 2010/093298 A1 (PRATT PATRICK [IE] ET AL) 15 April 2010 (2010-04-15) * abstract * * paragraphs [0018] - [0097] * * figures 1-8 * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 11 March 2025 | Aquilani, Dario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 24 21 1647

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | | Publication date |
|---|---|---|---|---|
| US 2014355456 A1 | 04-12-2014 | CN | 109818691 A | 28-05-2019 |
| | | CN | 113852428 A | 28-12-2021 |
| | | US | 2014355456 A1 | 04-12-2014 |
| | | US | 2016365933 A1 | 15-12-2016 |
| US 9712198 B1 | 18-07-2017 | CN | 107204790 A | 26-09-2017 |
| | | KR | 20170108746 A | 27-09-2017 |
| | | TW | 201735557 A | 01-10-2017 |
| | | US | 9712198 B1 | 18-07-2017 |
| US 2010093298 A1 | 15-04-2010 | CN | 102217202 A | 12-10-2011 |
| | | JP | 5627023 B2 | 19-11-2014 |
| | | JP | 2012505595 A | 01-03-2012 |
| | | TW | 201106641 A | 16-02-2011 |
| | | US | 2010093298 A1 | 15-04-2010 |
| | | US | 2012015616 A1 | 19-01-2012 |
| | | WO | 2010042295 A2 | 15-04-2010 |

EPO FORM P0459

For more details about this annex : see Official Journal of the European Patent Office, No. 12/82